# EUROPEAN PATENT APPLICATION

(11) **EP 4 531 340 A1**
(43) Date of publication of application: **02.04.2025**
(21) Application number: 24202008.9
(22) Date of filing: 23.09.2024
(51) Int. Cl.: H04L 9/40, H04W 12/08, H04L 69/22

(54) **METHODS FOR PROTECTING RESOURCES ACCESSIBLE TO A DEVICE CONNECTED VIA AN AUTHORIZED DEVICE OPERATING AS A HOTSPOT**

(30) Priority: 27.09.2023 IN 202311065032
(71) Applicant: F5, INC., Seattle, WA 98104 (US)
(72) Inventor: GOLI, Nihar, Karimanagar (IN)
(74) Representative: Savi, Massimiliano

(57) **Abstract**

Methods, non-transitory computer readable media, network traffic management devices, and network traffic management systems that protect resources that are accessible to a secondary device that is connected to a hotspot hosted by a host device that has an established VPN tunnel with a secure server storing the protected resources are illustrated. With this technology, a connection to a protected resource via a VPN tunnel is established by a host device based on a successful compliance check and the host device also simultaneously operates as a hotspot. The host device intercepts one or more data packets from a secondary device that is connected to the hotspot and in response to determining that the data packets have a TTL value that is less than a default value, the host device executes a security action with respect to the data packets.

## Description

This technology relates to methods and systems for protecting resources that are accessible to a device via an authorized host device operating as a hotspot.

### BACKGROUND

Many organizations and businesses have architectures that allow for remote users to securely access protected resources at a secure server by utilizing a virtual private connection (VPN). When a remote device connects to the secure server using a VPN, the connection may create what may be referred to as a VPN tunnel, which can be a communication channel between the remote device and the secure server that may provide additional security such as encryption of the traffic. In many cases, a user must be authorized and is likely to have to provide login credentials in order to establish such a VPN tunnel between the remote device and the security server. Additionally, the security protocols of the organization associated with the secure server may also require the remote device to pass a security compliance check prior to establishing the VPN tunnel with the secure server. A security compliance check may involve a software program performing an analysis of the remote device to determine whether the remote device has the required security protections in place in order to be allowed to access the secure server. For example, an organization may require remote device to include required anti-virus software, anti-malware, data loss prevention (DLP) software, and any other such software or device characteristics as may be required by the organization associated with the secure server. These requirements provide a level of security for the protected resources at the remote server. For example, if a remote device were to have access to the secure server without having the appropriate anti-virus software, then a user who is remotely accessing the secure server but unknowingly has malware on their device may be opening the secure server up to attack from the malware. Similarly, if a remote device that accessed the secure server did not include required DLP software, then the secure server may be exposed to a data theft risk from the remote device (e.g., whether via malware unknowingly installed on the remote device or intentional removal by a user that is authorized to access the remote server but is not authorized to exfiltrate data from it).

Various computing devices that may be used to access a secure server in the manner described above may also be capable of operating as a hotspot (or mobile hotspot) that can provide Internet access to other nearby devices. For example, a user may utilize a host device (e.g., a mobile smartphone) to create a VPN tunnel with the secure server as described above while simultaneously operating as mobile hotspot to allow the user to connect a secondary device (e.g., their laptop) to the Internet via the hotspot hosted by the host device (or, e.g., conversely, a laptop may be used to create a VPN tunnel and host a hotspot while a smartphone may be used as the secondary device). However, this can present significant security risks to the protected resources on the secure server because as the host device has already established a VPN tunnel to the secure server, the secondary device may (either intentionally or inadvertently) have access to this established VPN tunnel upon connecting to the host device as a hotspot. In other words, the secondary device, which may not have undergone any security screening such as passing a security compliance check to ensure the device has adequate anti-virus or DLP software, may now have access to the secure server via the hotspot and VPN tunnel provided by the host device, which may put the protected resources of the secure server at risk of theft, corruption or other malicious activity whether by intentional acts of the user of the secondary device or unknowingly via malware contained on the secondary device.

Therefore, it is desirable to create a system for protecting resources of a secure server that are accessible via a VPN tunnel to an authorized host device that is also operating as a hotspot to prevent other devices with inadequate security protections from gaining access to the protected resources of the secure server.

### SUMMARY

A method implemented by a network traffic management system including one or more server devices, host devices or client devices that includes establishing, a connection to a protected resource via a virtual private network (VPN) tunnel based on a successful compliance check. The method further includes operates as a hotspot when the connection to the protected resource is established. The method includes intercepting one or more data packets from a secondary device that is connected to the hotspot. In response to determining that the one or more data packets have a time-to-live (TTL) value that is less than a default value, a security action is executed.

A network traffic management device includes a memory including programmed instructions stored thereon and one or more processors configured to be capable of executing the stored programmed instructions to establish a connection to a protected resource via a VPN tunnel based on a successful compliance check. The network management device operates as a hotspot when the connection to the protected resource is established. The network traffic management device intercepts one or more data packets from a secondary device that is connected to the hotspot. In response to determining that the one or more data packets have a TTL value that is less than a default value, a security action is executed.

A non-transitory computer readable medium having stored thereon instructions for including executable code that, when executed by one or more processors, causes the processors to establish a connection to a protected resource via a VPN tunnel based on a successful compliance check. The processors operate as a hotspot when the connection to the protected resource is established. The processors intercept one or more data packets from a secondary device that is connected to the hotspot. In response to determining that the one or more data packets have a TTL value that is less than a default value, a security action is executed.

A network traffic management system, comprising one or more server devices, network traffic management devices or client devices with memory comprising programmed instructions stored thereon, and one or more processors configured to be capable of executing the stored programmed instructions to establish a connection to a protected resource via a VPN tunnel based on a successful compliance check. The processors operate as a hotspot when the connection to the protected resource is established. The processors intercept one or more data packets from a secondary device that is connected to the hotspot. In response to determining that the one or more data packets have a TTL value that is less than a default value, a security action is executed.

This technology provides a number of advantages including providing methods, non-transitory computer readable media, network traffic management devices, and network traffic management systems that provide security from devices that have not undergone security compliance checks from accessing the protected resources via a host device that is operating as a hotspot and has established a VPN tunnel with the protected resource.

### BRIEF DESCRIPTION OF THE DRAWINGS

FIG. 1 is block diagram of an exemplary network traffic management system;
FIG. 2 is a block diagram of an exemplary network traffic management device;
FIG. 3 is a flow diagram of an exemplary method for providing access control to a protected server in relation to a secondary device attempting to access the protected server via a hotspot operated by a host device that has an established VPN tunnel with the protected server; and
FIG. 4 is a flowchart of an exemplary method for protecting resources that are accessible to a device via an authorized host device operating as a hotspot.

While each of the drawing figures illustrates a particular example for purposes of illustrating a clear example, other examples may omit, add to, reorder, or modify any of the elements shown in the drawing figures. For purposes of illustrating clear examples, one or more figures may be described with reference to one or more other figures, but using the particular arrangement illustrated in the one or more other figures is not required in the examples.

### DETAILED DESCRIPTION

In the following description, for the purpose of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

It will be further understood that: the term "or" may be inclusive or exclusive unless expressly stated otherwise; the term "set" may comprise zero, one, or two or more elements; the terms "first", "second", "certain", and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

A "computer system" refers to one or more computers, such as one or more physical computers, virtual computers, and/or computing devices. As an example, a computer system may be, or may include, one or more server computers, cloud-based computers, cloud-based cluster of computers, virtual machine instances or virtual machine computer elements such as virtual processors, storage and memory, data centers, storage devices, desktop computers, laptop computers, mobile devices, or any other special-purpose computing devices. Any reference to a "computer system" herein may mean one or more computers, unless expressly stated otherwise. When a computer system performs an action, the action is performed by one or more computers of the computer system.

A "client" (also referred to as a "client device") refers to a combination of integrated software components and an allocation of computational resources, such as memory, a computing device, and processes on a computing device for executing the integrated software components. The combination of the software and computational resources are configured to interact with one or more servers over a network, such as the Internet. A client may refer to either the combination of components on one or more computers, or the one or more computers.

A "server" (also referred to as a "server system", "server computer system", "server device" or "server apparatus") refers to a combination of integrated software components and an allocation of computational resources, such as memory, a computing device, and processes on the computing device for executing the integrated software components. The combination of the software and computational resources provide a particular type of function on behalf of clients of the server. A server may refer to either the combination of components on one or more computers, or the one or more computers. A server may include multiple servers; that is, a server may include a first server computing device and a second server computing device, which may provide the same or different functionality to the same or different set of clients.

As used herein, the term "website" may refer to a collection of web pages, web resources, and other web content made available over the Internet. For example, a first website may include web content hosted by a web server system, such as a first server device, while a second website may include web content hosted by a second web server system, such as a second web server device. Often, the web content of a website shares a single domain name or set of related domain names that are owned or controlled by a common entity. A website may include web page content accessible over the Internet through a browser, and/or web content that is accessible over the Internet from another client application. Such applications may include web applications executing in a browser(s) and/or native application(s) installed on client computing devices (also referred to as "client devices").

This document generally describes systems, methods, devices, and other techniques for protecting resources that are accessible to a device via an authorized host device operating as a hotspot. An entity that has an infrastructure for allowing authorized users to remotely access protected resources (e.g., resources stored on private corporate servers) via a virtual private network (VPN), for example, based on the accessing device passing a security compliance check, may wish to prevent other devices that have not passed a security compliance check from accessing the protected resources via the device connected to the VPN in the case where the connected device is also operating as a hotspot. The disclosed techniques may involve providing software on a device that is also operating as a hotspot (aka, the "host device") that may analyze traffic that is directed to the protected resources (aka, the "secure server") to make determinations about whether that traffic should be allowed to proceed to the secured server or whether a security action should be taken with respect to the traffic (e.g., dropping the packets). The software installed on the host device may cause the host device to analyze headers of the network traffic to determine whether the header contains a time-to-live value that is less than a default value, which may indicate that the packet originated from a secondary device that is accessing the host device as a hotspot. If the host device determines that the TTL value of one or more network packets is less than the default value, the host device may execute a security action, such as dropping the one or more network packets or dropping the VPN connection to the secure server.

The techniques may further involve providing access to a secondary device if the secondary device can pass a security compliance check. For example, if a secondary device is connected to the host device and the host device determines that network packets originating from the secondary device have TTL values less than the default value, the host device may drop those packets, but then may also provide the secondary device with a way of performing a security compliance check. For example, the host device may provide a link to download security compliance check software to the secondary device. Upon downloading the security compliance check software, the secondary device may execute the software to perform the security compliance check and assuming the secondary device passes the security compliance check, the software may then cause network packets sent from the secondary device to have a modified header that includes a flag indicating that the secondary device has passed the security compliance check. In some examples, the flag may be an authentication flag that is a unique key that is recognizable by the compliance software running on the secondary device, host modules on the host device and server modules on server devices. Thus, in some examples, if the secondary device connects to the hotspot operated by the host device for the purpose of communicating with the secure server via the VPN tunnel established by the host device, the host device may analyze the headers of the packets originating from the secondary device and, if it determines the header includes the flag indicating that the secondary device has passed the security compliance check, then the host device may allow the traffic from the secondary device to flow to the secure server via the VPN. In this way, the disclosed techniques can protect the secure server from being accessed by devices that have not passed a security compliance check, thereby improving the security of protected resources hosted on the secure server from devices that may unknowingly have malware or may lack appropriate data loss prevention (DLP) software.

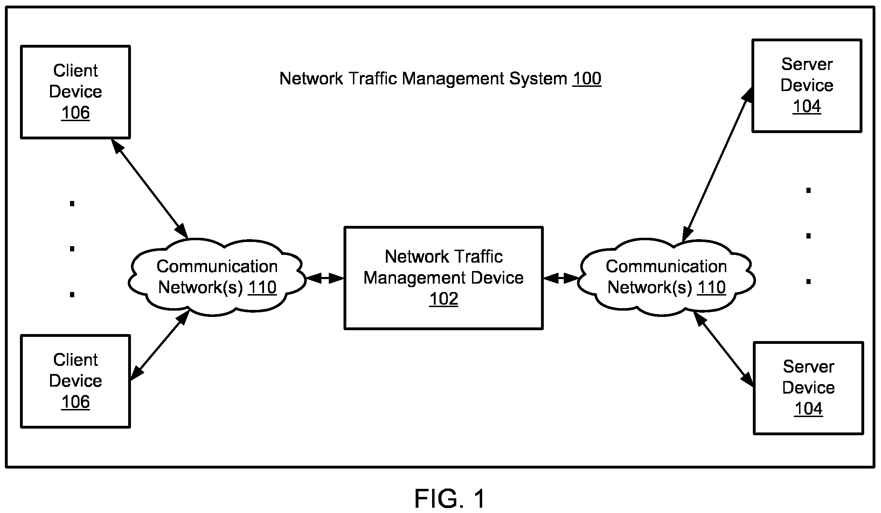

Referring to FIG. 1, an exemplary network traffic management system 100 is illustrated. The network traffic management system 100 in this example includes a network traffic management device 102 that is coupled to server devices 104, and client devices 106 via communication network(s) 110, although network traffic management device 102, server devices 104, and client devices 106 may be coupled together via other topologies. The network traffic management system 100 also may include other network devices such as routers or switches, for example, which are known in the art and thus will not be described herein. This technology provides a number of advantages including methods, non-transitory computer readable media, network traffic management systems 100, and network traffic management devices 102 that provide protection of resources that are accessible to a secondary device (e.g., client device 106) via an authorized host device (e.g., network traffic management device 102) having an established VPN tunnel with a secure server (e.g., server device 104) containing the resources and that is also simultaneously operating as a hotspot.

In this particular example, the network traffic management device 102, server devices 104, and client devices 106 that are disclosed in FIG. 1 as dedicated hardware devices. However, in some examples, one or more of the network traffic management device 102, server devices 104, and client devices 106 or portions thereof can also be implemented in software within one or more other devices in the network traffic management system 100. Although the description herein is generally directed to a system that is distributed across multiple devices, it should be understood that it is contemplated that the techniques disclosed herein could alternatively be adapted for use on a centralized system.

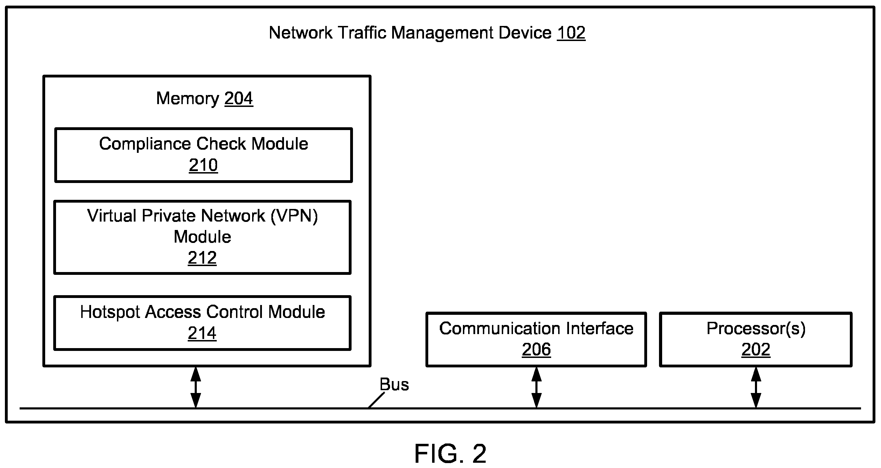

Referring to FIGS. 1-2, the network traffic management device 102 of the network traffic management device system 100 may perform any number of functions, such as for example, performing security compliance checks, establishing a VPN connection/tunnel with a server device 104, operating as a hotspot and providing access control functionalities with respect to secondary device(s) connected to a hotspot hosted by the network traffic management device 102 that may be attempting to access a server device 104 using a VPN tunnel established by the network traffic management device 102. The network traffic management device 102 in this example includes processor(s) 202, a memory 204, and a communication interface 206, which are coupled together by a bus, although the security server device 102 can include other types or numbers of elements in other configurations.

The processor(s) 202 of the network traffic management device 102 may execute programmed instructions stored in the memory 204 of the network traffic management device 102 for any number of functions described and illustrated herein. The processor(s) 202 of the network traffic management device 102 may include one or more central processing units (CPUs) or general purpose processors with one or more processing cores, for example, although other types of processor(s) can also be used.

The memory 204 of network traffic management device 102 stores these programmed instructions for one or more aspects of the present technology as described and illustrated herein, although some or all of the programmed instructions could be stored elsewhere. A variety of different types of memory storage devices, such as RAM, ROM, hard disk, solid state drives, flash memory, or other computer readable medium which is read from and written to by a magnetic, optical, or other reading and writing system that is coupled to the processor(s), can be used for the memory.

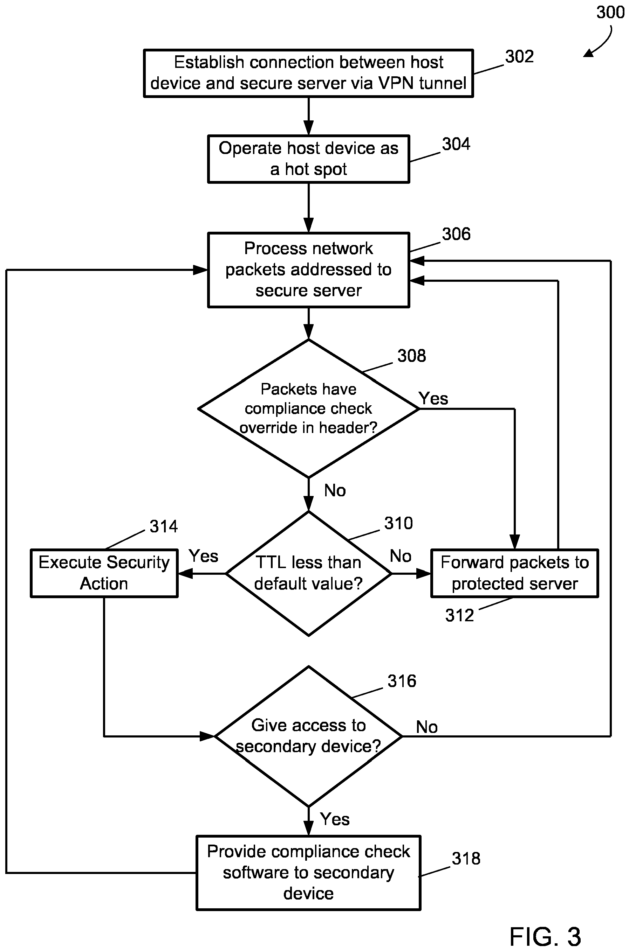

Accordingly, the memory of the network traffic management device 102 can store one or more modules that can include computer executable instructions that, when executed by the network traffic management device 102, cause the network traffic management 102 to perform actions, such as to transmit, receive, or otherwise process network messages, for example, and to perform other actions described and illustrated below with reference to FIGS. 3-4. The modules can be implemented as components of other modules. Further, the modules can be implemented as applications, operating system extensions, plugins, or the like.

In this particular example, the memory of the network traffic management device 102 includes a compliance check module 210. According to some examples, the compliance check module 210 may include software installed on network traffic management device 102 that can perform a security compliance check on the network traffic management device 102 to determine whether the network traffic management device 102 includes certain predetermined security features, such as required anti-virus software, anti-malware software, DLP software, and any other such security features as may be required by an organization operating the network traffic management system 100. In some examples, the security compliance check module 210 may also seek to confirm whether an anti-virus software program, an anti-malware software program or a DLP program is the most recent version, is from a specified vendor, whether the software program last performed a scan of the device within a predetermined threshold time frame (e.g., the most recent scan must have been within the last hour), whether the software program performed a database update (or at least checked for an update) within a predetermined threshold timeframe (e.g., the anti-virus definition database was last updated within the last 24 hours), whether a software program has received a required patch or not, whether a software program is actively running or not or any other such characteristic of a software program as may be relevant to an assessment of the security of a device. According to some examples, a network traffic management device 102 must have successfully passed a security compliance check prior to being able to establish a VPN tunnel with a secure server (e.g., server device 104). Thus, in some examples, the compliance check module 210 may include software that was required to be installed on network traffic management device 102 by an organization operating network traffic management system 100 prior to being able to attempt to access a secure server via a VPN. In various examples, the compliance check module 210 may execute a security compliance check on network traffic management device 102 at different intervals. For example, in some examples, security compliance checks may be run intermittently (e.g., once an hour, once a day, etc.) or in some examples a security compliance check may be run in response to some other event, such as for example, in response to an attempt by network traffic management device 102 to initiate a VPN tunnel with a secure server.

The memory 204 of the network traffic management device 102 can also include a virtual private network (VPN) module 212. The VPN module 212 can include software that is configured to allow network traffic management device 102 to establish a VPN connection or VPN tunnel with a server device 104. In some examples, the VPN module may require a user to be authenticated prior to establishing the VPN tunnel, by for example, entering a username and password, performing secondary authentication using a mobile device, obtaining biometric signals of the user or any other such authentication technique that is known or may be later developed. In some examples, a VPN tunnel established between the network traffic management device 102 and a server device 104 may be secure (e.g., the traffic between the two may be encrypted), such that the only way to access protected resources at a secure server device 104 is through the process of establishing a VPN tunnel with the secure server device 104 as described herein. According to some examples, the VPN module 212 may determine whether the network traffic management device 102 has passed a security compliance check (as executed by the compliance check module 210 described above) before allowing a VPN tunnel to be established between the network traffic management device 102 and a server device 104. In some examples, upon utilizing the VPN module 212 to attempt to establish a VPN connection/tunnel with a server device 104, the VPN module 212 may cause the compliance check module 210 to run a security compliance check and receive the results of the security compliance check before allowing the VPN tunnel to be established. In other words, prior to establishing the VPN tunnel with a server device 104, the VPN module 212 may need to receive an indication from the compliance check module 210 that the network traffic management device 102 contains all of security features required for network traffic management device 102 to be allowed to connect to a secure server device 104.

The memory 204 of the network traffic management device 102 can also include a hotspot access control module 214, which can provide access control between a secondary device connected to the network traffic management device 102 that is operating as a hotspot and a secure server device 104 to which the network traffic management device 102 has an established VPN tunnel. As will be appreciated by those of ordinary skill in the art, it is typical for various devices such as smartphones, tablets, laptops, etc. to be configured to be able to operate a mobile hotspot, allowing other nearby devices to connect and gain access to the Internet. As such, the network traffic management device 102 may be configured to operate as a hotspot that allows other secondary devices (e.g., client devices 106) to gain access to the Internet via the network traffic management device 102, however if the network traffic management device 102 also has an already established VPN tunnel with a secure server device 104, then a secondary device connected to hotspot hosted by the network traffic management device 102 may inadvertently have access to the secure server device 104 via the established VPN tunnel.

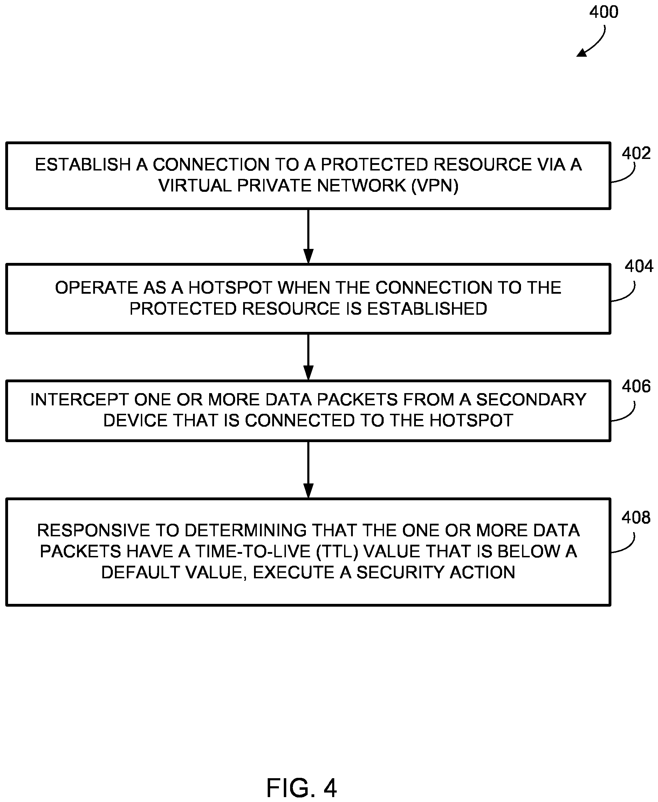

Thus, as described further below with regards to FIGS. 3 and 4, the network traffic management device 102 may provide access control functionalities to prevent a secondary device who has not passed the necessary security compliance check from accessing a secure server device 104 (via a VPN tunnel to the secure server device 104 established by the network traffic management device 102) by connecting to the hotspot hosted by the network traffic management device 102. For example, the hotspot access control module 214 may be configured to analyze network packets that are addressed to the secure server to which a VPN tunnel has been established to make a determination as to whether they should be allowed to be sent prior to sending the network packets to the secure server. In some examples, the hotspot access control module 214 may examine the header of each such packet to identify the time-to-live (TTL) value of the packet and compare it to a predetermined default value. Although the predetermined default value could be set to any number desired by a system administration, a typical default value would be "64," as this is typically the initial TTL value used when a network packet is created. In other words, if a TTL value of a given network packet is "64" in a system where "64" is the initial value used at time of creation of the network packet, this would indicate that the packet has not yet undergone any hops, whereas if the value of the given network packet is "63", this would indicate that the network packet has undergone one hop already. As will be appreciated by those of ordinary skill in the art, when a secondary device (e.g., client device 106) connects to a hotspot hosted by the network traffic management device 102 and then sends traffic to the Internet through the network traffic management device 102, that traffic will have undergone one hop by the time it arrives at the network traffic management device 102, having been transmitted from the secondary device to the network traffic management device 102. Thus, network packets at network traffic management device 102 that have originated from a secondary device will have a TTL of "63" (or less, for example, in a case where the secondary device is able to connect the hotspot via a third intermediary device) when they arrive at the network traffic management device 102. Accordingly, when examining outbound network packets that are directed to a secure server that is the subject of a VPN tunnel between the network traffic management device 102 and the secure server, the hotspot access control module 214 can distinguish between network packets originating from the network traffic management device 102 itself (which has passed a security compliance check) and packets originating from secondary devices 106 (which are unknown to have passed a security compliance check) by examining the TTL values of the network packets and comparing them to a default value to determine whether the TTL values are less than the default value or not. If the hotspot access control module 214 identifies one or more packets that have TTL values that are less than the default value, then the network traffic management device 102 may execute a security action, such as dropping the packets or severing the VPN connection with the secure server device 104 to prevent the packets from being sent to the secure server device 104. In this way the network traffic management device 102 can protect a secure server 104 to which it has an established VPN tunnel from traffic originating from secondary devices that have not undergone the appropriate security screenings, but that would otherwise have access to the secure server device 104 by virtue of having connected to a hotspot hosted by the network traffic management device 102. Using the TTL value to identify the presence of a secondary device connected to the hotspot in this manner is advantageous over other possible methods, such as examining the source IP address of the packets because for example, the source IP address of the packet may have been translated before it is examined by the network traffic management device 102 when network address translation (NAT) is enabled, such that this would be an ineffective way of identifying traffic originating from the secondary device.

In some examples, the hotspot access control module 214 may include software configured to facilitate the performance of a security compliance check on a secondary device to allow the secondary device to have access to the secure server 104 via the hotspot, if so desired by a user. For example, the hotspot access control module 214 may be configured to, upon determining that packets are being sent from a secondary device (i.e., by detecting packets with TTL values with less than the default value), identify the secondary device (e.g., by scanning wireless signals such as Wi-Fi signals, Bluetooth signals, etc. of nearby devices and communicating with them to determine which device is accessing the hotspot, by establishing communication link(s) with previously connected device(s) that have been detected nearby based on wireless signal detection (e.g., establishing a Bluetooth or Wi-Fi connection between a recognized/previously connected device such as a smartphone or laptop) or by receiving information or data from the secondary device that is sufficient to identify the device (e.g., identifying a source IP address, MAC address or other such identifier in a header of the identified packets)) and may communicate with the secondary device to facilitate the provision of security compliance check software to the secondary device. For example, the network traffic management device 102 may send a link or an http redirection request to a download page to the secondary device that may, for example, be displayed by a web browser being used on the secondary device. Alternatively, in some examples, a user of the secondary device may manually view a link displayed by the host device and copy the link on the secondary device or the link may be emailed to an email address associated with the user of the secondary device in response to the user of the host device entering the email address into a electronic form provided by software on the host device (e.g., VPN software or hotspot access control software). When activated by the secondary device, the link may cause the secondary device to download a lightweight security compliance check software package that can perform the necessary security compliance check on the secondary device and may provide other functionalities, such as an ability to modify the header of outgoing packets to include an authentication flag, ability to authenticate with the VPN server (e.g., by providing username/password) and an ability to communicate with the host device. Upon determining that the secondary device has successfully passed the security compliance check, the downloaded software may be further configured to modify or append headers of network packets being transmit by the secondary device to include a security compliance flag that indicates that the secondary device has passed the security compliance check. Thus, in some examples, the hotspot access control module 214 of the network traffic management device 102 may be further configured to analyze the headers of outgoing network packets to determine whether they include the security compliance flag, and if they do, the hotspot access control module 214 may override the TTL value analysis of the network packets and simply allow the packets to be sent to the secure server. In this way, if the disclosed system and methods can allow a user to utilize a secondary device to access the secure server by providing the secondary device with a way to perform the security compliance check.

This may be particularly useful if, for example, a user has a mobile smartphone that is registered with their company to access the secure server, but would like to use their laptop to access the secure server instead. In this case, the user could establish a VPN tunnel with the secure server using their smartphone, host a hotspot with the smartphone, connect their laptop to the hotspot hosted by the smartphone, undergo the process of having packets dropped and being prompted to download a security compliance check software as described above, and then upon successfully passing the downloaded security compliance check the laptop may now be able to access the secure server via the smartphone hotspot, but while ensuring that the laptop has the proper security protections in place so as to not put the secure server at risk of, for example, being attacked by a virus that was unknowingly present on the laptop.

As shown in FIG. 1, the network traffic management device 102 may be positioned between client devices 106 and server devices 104, such that the network traffic management device 102 can intercept or otherwise receive network traffic directed to one or more server devices 104. In this way, the network traffic management device 102 can analyze all traffic directed to a secure server device 104 from a secondary device (i.e., client device 106) that is accessing a hotspot hosted by the network traffic management device 102.

The communication interface 206 of the network traffic management device 102 operatively couples and communicates between the network traffic management device 102, the client devices 106 and the server devices 104, which are coupled together at least in part by the communication network(s) 110, although other types or numbers of communication networks or systems with other types or numbers of connections or configurations to other devices or elements can also be used.

By way of example only, the communication network(s) 110 can include local area network(s) (LAN(s)) or wide area network(s) (WAN(s)), and can use TCP/IP over Ethernet and industry-standard protocols, although other types or numbers of protocols or communication networks can be used. The communication network(s) 110 in this example can employ any suitable interface mechanisms and network communication technologies including, for example, teletraffic in any suitable form (e.g., voice, modem, and the like), Public Switched Telephone Network (PSTNs), Ethernet-based Packet Data Networks (PDNs) hosting HyperText Transfer Protocol (HTTP), combinations thereof, and the like. The communication network(s) may also include local connections between the client device(s) and the network traffic management device 102, such as direct Wi-Fi connections, Bluetooth connections, near-field communication, direct wired connections, or any other method of a client device 106 communicating directly or indirectly with network traffic management device 102.

The network traffic management device 102 is illustrated in this example as including a single device, but can include multiple devices in other examples, each of which has processor(s) (each processor with processing core(s)) that implement step(s) of this technology. In these examples, one or more of the devices can have a dedicated communication interface or memory. Alternatively, one or more of the devices can utilize the memory 204, communication interface 206, or other hardware or software components of one or more other of the devices included in the network traffic management device 102.

Accordingly, one or more of the devices that together comprise the network traffic management device 102 can be standalone devices or integrated with one or more other devices or apparatuses, such as the server device 104, for example. Moreover, one or more of the devices of the network traffic management device 102 can be in a same or a different communication network including one or more public, private, or cloud networks, for example. In yet other examples, a plurality of network traffic management devices 102 may be deployed, within and/or outside of a local area network associated with the server device 104, which communicates with any number of application servers or end station computers, and other network topologies can also be used.

The network traffic management device 102 also may also be coupled via an I/O subsystem to at least one output device in some examples. The output device can be a digital computer display. Examples of a display that may be used in various examples include a touch screen display or a light- emitting diode (LED) display or a liquid crystal display (LCD) or an e-paper display. The network traffic management device 102 may include other type(s) of output devices, alternatively or in addition to a display device. Examples of other output devices include printers, ticket printers, plotters, projectors, sound cards or video cards, speakers, buzzers or piezoelectric devices or other audible devices, lamps or LED or LCD indicators, haptic devices, actuators or servos.

At least one input device may be coupled to an I/O subsystem of the network traffic management device 102 in some examples for communicating signals, data, command selections or gestures to processor 304. Examples of input devices include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device, which may perform cursor control or other automated control functions such as navigation in a graphical interface on a display screen, alternatively or in addition to input functions. A control device may be a touchpad, a mouse, a trackball, or cursor direction keys for communicating direction information and command selections to processor(s) 202 and for controlling cursor movement on a display. An input device may have at least two degrees of freedom in two axes, a first axis (e.g., x) and a second axis (e.g., y), that allows the device to specify positions in a plane. Another type of input device may be a wired, wireless, or optical control device such as a joystick, wand, console, steering wheel, pedal, gearshift mechanism or other type of control device. An input device may include a combination of multiple different input devices, such as a video camera and a depth sensor.

According to some examples, a network traffic management device 102 may be any computing device that can be used to host a hotspot and establish a VPN tunnel with a server device 104, such as for example, a smartphone, a laptop computer, a desktop computer, a tablet computing device, or any other such type of computing device. In another example, the network traffic management device 102 may be an internet of things (IoT) device or other type of network device in which one or more of an output device, input device, and control device are omitted. Or, in such an example, an input device may be one or more cameras, motion detectors, thermometers, microphones, seismic detectors, other sensors or detectors, measurement devices or encoders and an output device may be a special- purpose display such as a single-line LED or LCD display, one or more indicators, a display panel, a meter, a valve, a solenoid, an actuator or a servo.

Referring back to FIG. 1, the server device(s) 104 of network traffic management system 100 in this example may be a commercial web server hosting one or more webpages that is accessible by client device(s) 106. The webpages may request web resources from any number of other domains. Example types of requests include XMLHttpRequests, Fetch API requests, WebSockets, WebRTCs, Beacons, form submissions, resource fetching (such as links, scripts, images, videos, etc.), and others. According to some examples, the server device(s) 104 may be secure servers that are only accessible by authorized users. For example, a device accessing a server device 104 may need to be authenticated by providing a username and password to access the server device 104. Furthermore, in some examples, the server device(s) 104 may be configured to establish a VPN tunnel with a network traffic management device 102, which may be encrypted to provide secure communication between the devices. According to some examples, a server device 104 may require external devices that wish to connect with the server device 104 (e.g., via a VPN tunnel) to pass a security compliance screening to ensure that such devices include adequate security so as not to put protected resources stored by the server device 104 at risk of theft and/or corruption.

Each of the server devices 104 includes processor(s), memory, and a communication interface, which are coupled together by a bus or other communication link (not illustrated), although other numbers or types of components could be used. The server devices 104 in this example can include application servers or database servers, for example, although other types of server devices 104 can also be included in the security server system 100. The server device(s) 104 in this example can exchange communications to prevent or facilitate interactions with hosted web applications, which are optionally protected by the network traffic management device 102 as described and illustrated herein, by users of the client device(s) 106.

Accordingly, in some examples, a server device 104 may process web requests (e.g., requests to view web content, login and other requests) received from the network traffic management device 102 and/or client device(s) 106 via the communication network(s) 110 according to the HTTP-based application RFC protocol, for example. A protected web application may be operating on the server device 104 and transmitting data (e.g., files or web pages) to the network traffic management device 102 and/or client device(s) 106 in response to requests from the network traffic management device 102 and/or the client device(s) 106. The server device 104 may be hardware or software or may represent a system with multiple servers in a pool, which may include internal or external networks.

Although the server device(s) 104 are illustrated as single devices, a server device 104 in other examples may include multiple servers distributed across one or more distinct network computing devices that together server device 104. Moreover, the server device(s) 104 is not limited to a particular configuration. Thus, the server device(s) 104 may contain network computing devices that operate using a master/slave approach, whereby one of the network computing devices of the server device(s) 104 operate to manage or otherwise coordinate operations of the other network computing devices. A server device 104 may operate as a plurality of network computing devices within a cluster architecture, a peer-to peer architecture, virtual machines, or within a cloud architecture, for example.

Thus, the technology disclosed herein is not to be construed as being limited to a single environment and other configurations and architectures are also envisaged. Accordingly, any number of network traffic management devices 102, client devices 106 and server devices 104 may be used. The number of network traffic management devices 102, client devices 106 and server devices 104 are shown in FIG. 1 merely for purposes of providing an illustrative example.

Each of the client device(s) 106 of the network traffic management system 100 in this example includes any type of computing device that can exchange network data and interface with the webpages, such as mobile, desktop, laptop, or tablet computing devices, virtual machines (including cloud-based computers), or the like. Each of the client device(s) 106 in this example includes a processor, memory, and a communication interface, which are coupled together by a bus or other communication link (not illustrated), although other numbers or types of components could also be used. According to some examples, client device(s) 106 may include some or all of the features of network traffic management device 102, with the possible exception of lacking some of the particular software modules 210, 212 and 214 described with respect to the network traffic management device 102. Although, as described herein, in some examples a client device 106 may at some point be prompted to download a security compliance check program similar to compliance check module 210. Thus, in some examples, a client device 106 may be configured to download and execute a lightweight security compliance check program that operates to assess whether the client device 106 includes required security features (e.g., particular anti-virus software, DLP software, etc.) and upon determining that the client device 106 successfully passes that security compliance check (i.e., that the client device 106 includes the predetermined/required security features) is further configured to modify the headers of outgoing network packets transmit by the client device 106 to include a flag that indicates the client device 106 has successfully passed the security compliance check.

The client device(s) 106 may run interface applications, such as standard web browsers or native client applications, which may provide an interface to make requests for, and receive content stored on, the server device 106 via the network(s) 110. The client device(s) 106 may further include a display device, such as a display screen or touchscreen, or an input device, such as a keyboard, for example (not illustrated).

Although the exemplary network traffic management system 100 with the network traffic management device 102, server device(s) 104, client device(s) 106, and communication network(s) 110 are described and illustrated herein, other types or numbers of systems, devices, components, or elements in other topologies can be used. It is to be understood that the systems of the examples described herein are for exemplary purposes, as many variations of the specific hardware and software used to implement the examples are possible, as will be appreciated by those skilled in the relevant art(s).

In some examples, two or more computing systems or devices can be substituted for any one of the systems or devices in any example. Accordingly, principles and advantages of distributed processing, such as redundancy and replication also can be implemented, as desired, to increase the robustness and performance of the devices and systems of the examples. The examples may also be implemented on computer system(s) that extend across any suitable network using any suitable interface mechanisms and traffic technologies, including by way of example only, wireless traffic networks, cellular traffic networks, Packet Data Networks (PDNs), the Internet, intranets, and combinations thereof.

The examples may also be embodied as one or more non-transitory computer readable media having executable or programmed instructions stored thereon, such as in the memory 204, ROM, or storage of the network traffic management device 102, for one or more aspects of the present technology, as described and illustrated by way of the examples herein. The instructions in some examples include executable code that, when executed by one or more processors, such as one more processors 202 of the network traffic management device 102, cause the processors to carry out steps necessary to implement the methods of the examples of this technology that are described and illustrated herein.

Referring to FIG. 3, a flow diagram of an example method 300 of providing access control to a protected server in relation to a secondary device attempting to access the protected server via a hotspot operated by a host device that has an established VPN tunnel with the protected server is illustrated. In step 302 in this example, a host device (e.g., the network traffic management device 102 of the network traffic management system 100) establishes a connection between the host device and a secure server (e.g., server device 104) via a VPN tunnel. In some examples, the VPN tunnel may be encrypted and/or require the user of the host device to be authenticated. Further, as a condition of establishing the VPN tunnel with the secure server, the host device must first provide an indication to the VPN software that the host device has passed a security compliance check, which may be performed by executing security compliance check software stored on the host device. In some examples, the host device may execute a security compliance check in response to attempting to initiate a VPN connection with the secure server. The security compliance check may be passed if the host device is found to include one or more predetermined security features required by the security compliance check, such as for example, a required anti-virus software program and/or a required DLP software program. Thus, in some examples, after successfully passing a security compliance check, a VPN client of the host device may connect to a VPN server to establish a VPN.

In step 304, after successfully passing a security compliance check and having established a VPN tunnel with the secure server, the host device is operated as a hotspot. For example, in some instances, the host device may be for example, a smartphone or a laptop that is configured to be utilized as a mobile hotspot. In some examples, the host device may utilize a cellular or Wi-Fi signal to connect to the Internet and may advertise itself as a hotspot using a Wi-Fi signal, Bluetooth signal or other wireless signal that may allow other devices (e.g., client device(s) 106) to connect to the host device.

In step 306, the host device processes network packets addressed or directed to the secure server by examining the headers of such network packets, which may include both data packets originating from the host device itself, as well as data packets originating from secondary devices (e.g., client device(s) 106) that are utilizing the hotspot operated by the host device. As will be understood by those of ordinary skill in the art, a secure sockets layer VPN (SSL VPN) utilizes a routing table to determine whether packets are destined to a virtual VPN adapter created to direct traffic to the VPN or ethernet interface (e.g., eth0) and based on the routing of each packet the host device may distinguish network packets destined for the VPN from network packets directed elsewhere.

In step 308, the host device determines whether the network packets include a security compliance check override flag in their header. For example, when a packet originating from a secondary device arrives on the host machine, a VPN client on the host machine may inspect the packet header for the security compliance check override flag. In other words, the host device may examine the header of each outgoing network packet and look for a particular security compliance check override flag, which may be a particular alphanumeric string that is located in a specified field. According to some examples, the security compliance check software on the secondary device may include a mechanism for generating a unique flag/authenticated flag that can be generated by communicating with a VPN server. The host device can communicate with the same VPN server to obtain information used to validate the flag/header when receiving packets from the secondary device. If the host device determines that a particular network packet has the particular security compliance check override flag in its header, than this will cause the host device to override the TTL check described below and forward/allow the network packet to be transmitted into the established VPN tunnel to the secure server at step 312. After the network packet has been transmitted to the secure server at step 312, the host device will continue to receive and process network packets as described above previously with respect to step 306. However, if the host device determines that a particular network packet does not include the particular security compliance check override flag in its header, then the process will proceed to step 310.

In step 310, the host device determines whether the TTL values of the network packets are less than a default value. For example, if the default value is sixty-four ("64") then the host device will analyze the TTL value in the headers of each network packet to determine whether they are less than "64." If the TTL values of the network packets are determined to not be less than 64, then the No branch is taken to step 312. At step 312, the host device may transmit the network packet to the secure server via the established VPN tunnel. However, if in step 310 the host device determines that the TTL value of one or more of the network packets are less than 64, then the Yes branch is taken to step 314. In step 314, the host device will execute a security action in relation to the one or more network packets, such as dropping the packets at step 314. As will be understood by those of ordinary skill in the art, if the host device drops the network packets, the network packets will not be sent to the secure server and will simply cease traversing the network. Further, at step 314, based on the identification of network packets having a TTL value of less than the default value that caused the host device to drop the identified network packets, the host device may determine that a secondary device associated with the identified network packets is attempting to send traffic to the secure server via the VPN tunnel. In some examples, the host device may provide a notification to a user of the host device to notify the user about the activity of the secondary device (e.g., by presenting a notification in a graphical user interface of the host device).

In step 316, a determination may be made as to whether to provide the secondary device with access to the secure server via the hotspot operated by, and the VPN tunnel established by, the host device. This determination may be made in response to the host device determining that a secondary device has attempted to send network packets through the VPN tunnel and had their network packets dropped, as described above with respect to step 314. According to some examples, the host device may include software that provides a user interface that allows the user to indicate that they would like to provide the secondary device with access to the VPN tunnel to the secure device. In some examples, this determination may be made automatically by the host device based on, for example, a determination that the secondary device is owned by/associated with the owner/user of the host device (e.g., based on information provided by the secondary device to the host device) or a determination that the secondary device includes or has provided authentication credentials that would be sufficient to provide a login to the VPN tunnel (e.g., username and password for accessing a corporate server). In such cases, then the Yes branch is taken to step 318, where security compliance check software may be provided to the secondary device. However, if back in step 316 no determination to provide the secondary device with access to the secure server via the hotpot operated by, and the VPN tunnel established by, the host device, is made, then the No branch is taken back to step 306 as described earlier where the host device will continue to analyze headers of network packets that are addressed to the secure server.

At step 318, the host device may facilitate a provision of lightweight security compliance check software to the secondary device by, for example, providing the secondary device with a link to a download of the software. The secondary device may download and execute the security compliance check software and upon passing the security compliance check, the software may be further configured to modify or append the headers of outgoing network packets to include the security compliance check override flag. Thus, network packets originating from the secondary device and being transmit to the hotspot hosted by the host device will now contain the security compliance override flag, and the method will continue at step 306 in which the host device will continue to receive and analyze the headers of network packets as described previously above.

Referring to FIG. 4, a flow diagram of an example method 400 of protecting resources that are accessible to a device via an authorized host device operating as a hotspot is illustrated. In step 402 in this example, a host device (e.g., network traffic management device 102) establishes a connection to a protected resource (e.g., server device 104) via a VPN tunnel based on a successful compliance check. For example, the host device may include a security compliance check software program (e.g., compliance check module 210) that when executed may perform an analysis of the host device to determine whether the host device includes required security features, such as for example, particular anti-virus software and/or DLP software. In some examples, the security compliance check may be executed in response to the attempted initiation of the VPN tunnel with the protected resource. In other examples, the security compliance check may be performed intermittently (e.g., once a day) and the results of the security compliance check may be stored by the host device and accessed by the VPN software upon the attempted initiation of the VPN connection to the protected resource.

In step 404, after successfully passing the security compliance check, then the host device (e.g., network traffic management device 102) operates as a hotspot when the connection to the protected resource is established. For example, a user of the host device may access a hotspot functionality included with the host device and may manually activate it to allow other devices to utilize the hotspot for the purpose of accessing the Internet. In some examples, the hotspot may be secure, meaning that it may be password protected such that only authorized users may access the hotspot.

In step 406, the host device (e.g., network traffic management device 102) intercepts or otherwise receives one or more data packets from a secondary device (e.g., client device 106) that is connected to the hotspot. In other words, when the secondary device begins attempting to utilize the hotspot to transmit network packets to the Internet, the host device will receive these network packets from the secondary device and is configured to analyze them before forwarding them to their destination. For example, the host device may analyze the headers of network packets to identify whether they include a security compliance check flag and may also analyze them to determine whether the TTL value of a packet is less than a default value.

In step 408, in response to the host device determining that the one or more data packets have a TTL value that is less than a default value, the host device may execute a security action. According to some examples, the default value is "64", however it should be understood that this is only an example and the default value may be set to any appropriate number that corresponds to an initial TTL value of a network packet upon creation of the network packet. Thus, in the case where the default value is "64", the host device may analyze the one or more data packets to determine whether the TTL values of the packets are less than 64 and if so, the host device may execute a security action in relation to such packets.

In some examples, the security action may include dropping the one or more data packets to prevent the one or more data packets from entering the VPN tunnel. In some examples, the security action may include disconnecting from the VPN tunnel. For example, the host device may disconnect the VPN tunnel until such time as the hotspot is turned off to prevent packets from secondary devices that have not shown to have passed a security compliance check from being able to access the protected resource via the VPN tunnel. Thus, in some examples, the VPN software stored on the host device may be configured to perform a check to determine that the host device is no longer operating as a hotspot before allowing the VPN tunnel to be re-established. In some examples, a security action may include providing a notification to the user of the host device that a secondary device is attempting to send network packets through the VPN tunnel.

According to some examples, the method 400 may further include providing the secondary device with access to a compliance check software download (e.g., by the host device providing a link to download the software to the secondary device). The compliance check software is configured so that when the secondary device downloads and executes it, and passes the security compliance check, then the software may be configured to modify/append the headers of outgoing network packets of the secondary device to include a compliance check flag indicating that the device has passed a security compliance check. Thus, in some examples, the method 400 may further include the host device analyzing a header of each of the one or more data packets to determine whether the header includes a compliance check flag, and for each of the one or more data packets, responsive to determining that the header includes the compliance check flag, overriding an examination of the TTL value of the data packet and allowing the data packet to proceed to the VPN tunnel as described above in step 308 of FIG. 3.

As described previously, the compliance check software download may be configured to be downloaded by the secondary device and upon being executed by the secondary device may be configured to determine whether the secondary device passes a compliance check. Determining whether the secondary device passes a compliance check may include determining whether the secondary device includes features that specified by a predetermined security configuration. For example, the compliance check may include determining whether the secondary device includes specified security features including at least one of an anti-virus software program and a data loss prevention (DLP) program and the compliance check software may be further configured to append headers of outgoing data packets to include a compliance check flag in response to determining that the secondary device does pass the compliance check.

With this technology, protecting resources from a secondary device that is utilizing a hotspot operated by host device that has an established VPN tunnel to a secure server containing the resources may be achieved. The system can advantageously all the host device to detect network traffic originating from the secondary device by determining that such network traffic has a TTL value that is less than a default value. In response to detecting such traffic originating from a secondary device, the host device can then advantageously execute a security action with respect to the network traffic originating from the secondary device (e.g., drop the packets or disconnect the VPN tunnel) to shield the protected resource/secure server from interacting with the secondary device. In this way, the disclosed technology can advantageously shield a secure server containing a protected resource from interacting with a secondary device that has not passed a security compliance check, thereby protecting the secure server from potential malware or malicious actions that may originate from the secondary device. Further, examples of the disclosed technology also may facilitate an appropriate security compliance check on the secondary device so that use of the secondary device to access the secure server may be permitted if desired. Thus, the disclosed technology provides greater security for protected resources being accessed via a VPN tunnel, while nonetheless still providing for flexibility in terms of the number and nature of devices that are able to access the secure server via the VPN tunnel.

Having thus described the basic concept of the invention, it will be rather apparent to those skilled in the art that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations therefore, is not intended to limit the claimed processes to any order except as may be specified in the claims. Accordingly, the invention is limited only by the following claims and equivalents thereto.

## Claims

1. A method implemented by a network traffic management system comprising one or more host devices, server devices, network traffic management devices, or client devices the method comprising:
establishing a connection to a protected resource via a virtual private network (VPN) tunnel based on a successful compliance check;
operating as a hotspot when the connection to the protected resource is established;
intercepting one or more data packets from a secondary device that is connected to the hotspot; and
responsive to determining that the one or more data packets have a time-to-live (TTL) value that is less than a default value, executing a security action.

2. The method of claim 1, wherein the default value is sixty-four.

3. The method of claim 1, wherein the security action comprises:
dropping the one or more data packets to prevent the one or more data packets from entering the VPN tunnel; or
disconnecting from the VPN tunnel.

4. The method of claim 1, further comprising:
providing the secondary device with access to a compliance check software download;
analyzing a header of each of the one or more data packets to determine whether the header includes a compliance check flag; and
for each of the one or more data packets, responsive to determining that the header includes the compliance check flag, overriding an examination of the TTL value of the data packet and allowing the data packet to proceed to the VPN tunnel.

5. The method of claim 4, wherein the providing the secondary device with access to the compliance check software download, further comprises providing compliance check software to be downloaded by the secondary device and which is configured to:
determine whether the secondary device passes a compliance check, wherein the compliance check includes determining whether the secondary device includes specified security features comprising at least one of an anti-virus software program and a data loss prevention program; and
responsive to determining that the secondary device does pass the compliance check, append headers of outgoing data packets to include the compliance check flag.

6. A network traffic management device, comprising memory comprising programmed instructions stored thereon and one or more processors configured to be capable of executing the stored programmed instructions to carry out the steps of the method according to one or more of the claims from 1 to 5.

7. A non-transitory computer readable medium having stored thereon instructions comprising executable code that, when executed by one or more processors, causes the one or more processors to carry out the steps of the method according to one or more of the claims from 1 to 5.

8. A network traffic management system, comprising one or more server devices, network traffic management devices, or client devices with memory comprising programmed instructions stored thereon and one or more processors configured to be capable of executing the stored programmed instructions to carry out the steps of the method according to one or more of the claims from 1 to 5.
